# EUROPEAN PATENT APPLICATION

(11) **EP 2 639 267 A1**
(43) Date of publication of application: **18.09.2013**
(21) Application number: 12159131.7
(22) Date of filing: 13.03.2012
(51) Int. Cl.: C08L 23/14, B29C 47/00

(54) **Propylene polymer compositions**

(71) Applicant: Basell Poliolefine Italia S.r.l., 20127 Milano (IT)
(72) Inventor: Destro, Mara, 44138 Bologna (IT); CIARAFONI, Marco, 44123 Ferrara (IT); Massari, Paola, 44121 Ferrara (IT); Squarzoni, Stefano, 40015 Galliera (BO) (IT)
(74) Representative: Sacco, Marco

(57) **Abstract**

Propylene polymer compositions comprising:
A) from 70 wt% to 95 wt%, of a random copolymer of propylene with ethylene, containing from 3.5 wt% to 6.5 wt% of ethylene derived units, having a content of fraction insoluble in xylene at 25°C of not less than 93wt%;
B) from 5 wt% to 35 wt%, of a copolymer of propylene with ethylene, containing from 8.5 wt% to 17.0 wt % of ethylene derived units;

the sum A+B being 100;
wherein the melt flow rate ,MFR (ISO 1133 (230° C, 2.16 kg) ranges from 0.6 g/10 min to 20.2 g/10 min.

## Description

The present invention relates to a propylene polymer composition having improved flexural modulus, impact strength and excellent optical properties.

As is known, the isotactic polypropylene is endowed with an exceptional combination of excellent properties which render it suitable for a very great number of uses.

In order to improve the properties of the isotactic polypropylene the crystallinity of the propylene homopolymer is decreased by copolymerization of the propylene with small quantities of ethylene and/or α-olefins such as 1-butene, 1-pentene and 1-hexene. In this manner one obtains the so called random crystalline propylene copolymers which, when compared to the homopolymer, are essentially characterized by better flexibility and transparency.

Propylene random copolymers, however, although they have good transparency, do not offer, especially at low temperatures, sufficiently better impact resistance than the homopolymer which can be satisfactory used for the applications listed above.

It has been known for a long time that the impact resistance of polypropylene can be improved by adding an adequate quantity of elastomeric propylene-ethylene copolymer to the homopolymers by mechanical blending or sequential polymerization. However, this improvement is obtained at the expenses of the transparency of the material.

To avoid this inconvenient, US patent 4,634,740 suggests the blending of the polypropylene, in the molten state, with propylene-ethylene copolymers obtained with specific catalysts, and having an ethylene content ranging from 70 to 85% by weight. However, said compositions present transparency values (Haze) substantially comparable to those of the propylene homopolymer. Said patent, therefore, does not teach how to obtain compositions having good transparency.

EP-A-0557953, describes polyolefin compositions where one obtains a good balance of transparency, stiffness, and impact resistance even at low temperatures, by modifying a crystalline random copolymer of propylene with the proper quantities of a mechanical mixture comprising an elastomeric copolymer and one or more polymers chosen from LLDPE, LDPE and HDPE.

WO 01/92406 describes a propylene polymer composition comprising (percent by weight):
A) from 70 to 90%, of a random copolymer of propylene with ethylene, containing from 1 to 6%, of ethylene, having a content of fraction insoluble in xylene at room temperature of not less than 93;
B) from 10% to 30%, of a copolymer of propylene with ethylene, containing from 8 to 18%, of ethylene;
wherein the ratio (B)/C²_{B} of the percent by weight of (B), with respect to the total weight of (A) and (B), to the percent by weight of ethylene in (B), with respect to the total weight of (B), represented in the above formula by C²_{B}, is 2.5 or lower. The MFR L ranges from 0.5 to 50 g/10 min. This composition shows a good transparency but it can be improved by fine tuning the variables of the composition.

The applicant found a propylene polymer composition having a particular balance among the various parameter so that to obtain improved values of flexural modulus, good values of haze and good resistance to impact.

Thus one object of the present invention is a propylene polymer composition comprising:
A) from 70 wt% to 95 wt%, preferably from 75 wt% to 93 wt%, more preferably from of 80 wt% to 91 wt% of a random copolymer of propylene with ethylene, containing from 3.5 wt% to 6.5 wt%, preferably from 4.0 wt% to 5.5 wt%, of ethylene derived units, having a content of fraction soluble in xylene at 25°C comprised between 7.1 wt% and 11.2 wt%; preferably from 8.3 wt% to 10.2 wt%;
B) from 5 wt% to 35 wt%, preferably from 8 wt% to 25 wt%, more preferably from 11 wt% to 14 wt% of a copolymer of propylene with ethylene, containing from 8.5 wt% to 17.0 wt %, preferably from 8.8 wt% to 14.7 wt%, of ethylene derived units;
the sum A+B being 100;
wherein the melt flow rate ,MFR. (ISO 1133 (230° C, 2.16 kg).) ranges from 0.6 g/10 min to 20.2 g/10 min; preferably from 0.8 g/10 min to 5.0 g/10 min; more preferably from 1.0 g/10 min to 3.2 g/10 min;

The term "copolymer" includes polymers containing only propylene and ethylene.

The present invention is preferably endowed with one or more of the following features:
- Intrinsic Viscosity [η] of the fraction (of the overall composition) soluble in xylene at 25°C ranges from 1 to 4.5, more preferably from 1.3 to 4.0 dl/g.
- the fraction (of the overall composition) soluble in xylene at 25°C ranges from 10.3 wt% to 18.5 wt%
- a Flexural Modulus of the unucleated composition higher than 700 MPa;
- Haze of the unucleated composition measured on 50µm film lower than 4.1 % preferably lower than 3.2 % more preferably lower than 2.8 % .

The compositions of the present invention can be prepared by sequential polymerization in at least two polymerization steps. Such polymerization is carried out in the presence of stereospecific Ziegler-Natta catalysts. An essential component of said catalysts is a solid catalyst component comprising a titanium compound having at least one titanium-halogen bond, and an electron-donor compound, both supported on a magnesium halide in active form. Another essential component (co-catalyst) is an organoaluminum compound, such as an aluminum alkyl compound.

An external donor is optionally added.

The catalysts generally used in the process of the invention are capable of producing polypropylene with an Isotacticity Index greater than 90%, preferably greater than 95%. Catalysts having the above mentioned characteristics are well known in the patent literature; particularly advantageous are the catalysts described in US patent 4,399,054 and European patent 45977. Other examples can be found in US patent 4,472,524.

The solid catalyst components used in said catalysts comprise, as electron-donors (internal donors), compounds selected from the group consisting of ethers, ketones, lactones, compounds containing N, P and/or S atoms, and esters of mono- and dicarboxylic acids. Particularly suitable electron-donor compounds are 1,3-diethers of formula: 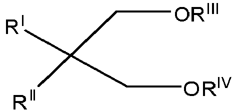 wherein R^{I} and R^{II} are the same or different and are C₁-C₁₈ alkyl, C₃-C₁₈ cycloalkyl or C₇-C₁₈ aryl radicals; R^{III} and R^{IV} are the same or different and are C₁-C₄ alkyl radicals; or are the 1,3-diethers in which the carbon atom in position 2 belongs to a cyclic or polycyclic structure made up of 5, 6, or 7 carbon atoms, or of 5-n or 6-n' carbon atoms, and respectively n nitrogen atoms and n' heteroatoms selected from the group consisting of N, O, S and Si, where n is 1 or 2 and n' is 1, 2, or 3, said structure containing two or three unsaturations (cyclopolyenic structure), and optionally being condensed with other cyclic structures, or substituted with one or more substituents selected from the group consisting of linear or branched alkyl radicals; cycloalkyl, aryl, aralkyl, alkaryl radicals and halogens, or being condensed with other cyclic structures and substituted with one or more of the above mentioned substituents that can also be bonded to the condensed cyclic structures; one or more of the above mentioned alkyl, cycloalkyl, aryl, aralkyl, or alkaryl radicals and the condensed cyclic structures optionally containing one or more heteroatoms as substitutes for carbon or hydrogen atoms, or both.

Ethers of this type are described in published European patent applications 361493 and 728769.

Representative examples of said dieters are 2-methyl-2-isopropyl-1,3-dimethoxypropane, 2,2-diisobutyl-1,3-dimethoxypropane, 2-isopropyl-2-cyclopentyl-1,3-dimethoxypropane, 2-isopropyl-2-isoamyl-1,3-dimethoxypropane, 9,9-bis (methoxymethyl) fluorene.

Other suitable electron-donor compounds are phthalic acid esters, such as diisobutyl, dioctyl, diphenyl and benzylbutyl phthalate.

The preparation of the above mentioned catalyst components is carried out according to various methods.

For example, a MgCl₂ . nROH adduct (in particular in the form of spheroidal particles) wherein n is generally from 1 to 3 and ROH is ethanol, butanol or isobutanol, is reacted with an excess of TiCl₄ containing the electron-donor compound. The reaction temperature is generally from 80 to 120 °C. The solid is then isolated and reacted once more with TiCl₄, in the presence or absence of the electron-donor compound, after which it is separated and washed with aliquots of a hydrocarbon until all chlorine ions have disappeared.

In the solid catalyst component the titanium compound, expressed as Ti, is generally present in an amount from 0.5 to 10% by weight. The quantity of electron-donor compound which remains fixed on the solid catalyst component generally is 5 to 20% by moles with respect to the magnesium dihalide.

The titanium compounds which can be used for the preparation of the solid catalyst component are the halides and the halogen alcoholates of titanium. Titanium tetrachloride is the preferred compound.

The reactions described above result in the formation of a magnesium halide in active form. Other reactions are known in the literature, which cause the formation of magnesium halide in active form starting from magnesium compounds other than halides, such as magnesium carboxylates.

The active form of magnesium halide in the solid catalyst component can be recognized by the fact that in the X-ray spectrum of the catalyst component the maximum intensity reflection appearing in the spectrum of the nonactivated magnesium halide (having a surface area smaller than 3 m²/g) is no longer present, but in its place there is a halo with the maximum intensity shifted with respect to the position of the maximum intensity reflection of the nonactivated magnesium dihalide, or by the fact that the maximum intensity reflection shows a width at half-peak at least 30% greater than the one of the maximum intensity reflection which appears in the spectrum of the nonactivated magnesium halide. The most active forms are those where the above mentioned halo appears in the X-ray spectrum of the solid catalyst component.

Among magnesium halides, the magnesium chloride is preferred. In the case of the most active forms of magnesium chloride, the X-ray spectrum of the solid catalyst component shows a halo instead of the reflection which in the spectrum of the nonactivated chloride appears at 2.56 Å.

The Al-alkyl compounds used as co-catalysts comprise the Al-trialkyls, such as Al-triethyl, Al-triisobutyl, Al-tri-n-butyl, and linear or cyclic Al-alkyl compounds containing two or more Al atoms bonded to each other by way of O or N atoms, or SO₄ or SO₃ groups.

The Al-alkyl compound is generally used in such a quantity that the Al/Ti ratio be from 1 to 1000.

The electron-donor compounds that can be used as external donors include aromatic acid esters such as alkyl benzoates, and in particular silicon compounds containing at least one Si-OR bond, where R is a hydrocarbon radical.

Examples of silicon compounds are (tert-butyl)₂ Si (OCH₃)₂, (cyclohexyl) (methyl) Si (OCH₃)₂, (phenyl)₂ Si (OCH₃)₂ and (cyclopentyl)₂ Si (OCH₃)₂. 1,3-diethers having the formulae described above can also be used advantageously. If the internal donor is one of these dieters, the external donors can be omitted.

Preferably said polypropylene composition being obtainable with a polymerization process carried out in the presence of a catalyst system comprising the product obtained by contacting (a) a solid catalyst component having preferably average particle size ranging from 15 to 80 µm comprising a magnesium halide, a titanium compound having at least a Ti-halogen bond and at least two electron donor compounds one of which being present in an amount from 40 to 90% by mol with respect to the total amount of donors and selected from succinates and the other being selected from 1,3 diethers, (b) an aluminum hydrocarbyl compound and optionally (c) an external electron donor compound.

As previously said, the polymerization process can be carried out in at least two sequential steps, wherein components A) and B) are prepared in separate subsequent steps, operating in each step, except the first step, in the presence of the polymer formed and the catalyst used in the preceding step. The catalyst is generally added only in the first step, however its activity is such that it is still active for all the subsequent step(s).

Component A) is preferably prepared before component B).

The regulation of the molecular weight is carried out by using known regulators, hydrogen in particular.

By properly dosing the concentration of the molecular weight regulator in the relevant steps, the previously described MFR and [η] values are obtained.

The whole polymerization process, which can be continuous or batch, is carried out following known techniques and operating in liquid phase, in the presence or not of inert diluent, or in gas phase, or by mixed liquid-gas techniques. It is preferable to carry out the propylene copolymerization step(s) for preparation of component A) in liquid propylene as diluent, and the other polymerization step(s) in gas phase. Generally there is no need for intermediate steps except for the degassing of unreacted monomers.

Reaction time, pressure and temperature relative to the two steps are not critical, however it is best if the temperature is from 20 to 100 °C. The pressure can be atmospheric or higher.

The catalysts can be pre-contacted with small amounts of olefins (prepolymerization).

The compositions of the present invention can also be obtained by preparing separately the said components A) and B) by operating with the same catalysts and substantially under the same polymerization conditions as previously explained (except that a wholly sequential polymerization process will not be carried out, but the said components and fractions will be prepared in separate polymerization steps) and then mechanically blending said components and fractions in the molten or softened state. Conventional mixing apparatuses, like screw extruders, in particular twin screw extruders, can be used.

The compositions of the present invention can also contain additives commonly employed in the art, such as antioxidants, light stabilizers, heat stabilizers, nucleating agents, colorants and fillers.

In particular, the addition of nucleating agents brings about a considerable improvement in important physical-mechanical properties, such as Flexural Modulus, Heat Distortion Temperature (HDT), tensile strength at yield and transparency.

Typical examples of nucleating agents are the p-tert.-butyl benzoate and the 1,3- and 2,4-dibenzylidenesorbitols.

The nucleating agents are preferably added to the compositions of the present invention in quantities ranging from 0.05 to 2% by weight, more preferably from 0.1 to 1% by weight with respect to the total weight.

The addition of inorganic fillers, such as talc, calcium carbonate and mineral fibers, also brings about an improvement to some mechanical properties, such as Flexural Modulus and HDT. Talc can also have a nucleating effect.

The compositions of the present invention are particularly suited for the production of injection molding articles in particular medical articles in view of the transparency of the composition that is maintained even after the sterilization at high temperature.

The particulars are given in the following examples, which are given to illustrate, without limiting, the present invention.

### Examples

### Melt Flow Rate

Determined according to ISO 1133 (230° C, 2.16 kg).

### Ethylene content of the polymers (C2 content)

Ethylene content has been determined by IR spectroscopy.

The spectrum of a pressed film of the polymer is recorded in absorbance vs. wavenumbers (cm⁻¹). The following measurements are used to calculate C2 content:
a) **Area (At)** of the combination absorption bands between 4482 and 3950 cm⁻¹ which is used for spectrometric normalization of film thickness.
b) **Area (A_{C2})** of the absorption band due to methylenic sequences (CH₂ rocking vibration) after a proper digital subtraction of an isotactic polypropylene (IPP) reference spectrum. The range 660 to 790 cm⁻¹.

### Molar ratios of the feed gases

Determined by gas-chromatography.

### Samples for the mechanical analysis

Samples have been obtained according to ISO 294-2

### Flexural Modulus

Determined according to ISO 178.

### Haze (50 µm film)

### Preparation of the film specimens

A film with a thickness of 50 µm is prepared by extruding the polymer in a single screw Collin extruder (length/diameter ratio of screw: 25) at a film drawing speed of 7 m/min. and a melt temperature of 210-250 °C.

### Haze (on 50 µm film):

Determined on 50 µm thick cast films of the test composition. The measurement was carried out on a 50x50 mm portion cut from the central zone of the film.

The instrument used for the test was a Gardner photometer with Haze-meter UX-10 equipped with a G.E. 1209 lamp and filter C. The instrument calibration was made by carrying out a measurement in the absence of the sample (0% Haze) and a measurement with intercepted light beam (100% Haze).

### Melting temperature, melting enthalpy and crystallization temperature

Determined by differential scanning calorimetry (DSC). A sample weighting 6 ±1 mg, is heated to 220 ±1° C at a rate of 20 °C/min and kept at 220 ±1° C for 2 minutes in nitrogen stream and it is thereafter cooled at a rate of 20° C/min to 40 ±2° C, thereby kept at this temperature for 2 min to crystallise the sample. Then, the sample is again fused at a temperature rise rate of 20° C/min up to 220° C ±1. The melting scan is recorded, a thermogram is obtained, and, from this, melting temperatures is read.

### Xylene soluble and insoluble fractions at 25°C (room temperature)

2.5 g of polymer and 250 cm³ of xylene are introduced in a glass flask equipped with a refrigerator and a magnetical stirrer. The temperature is raised in 30 minutes up to the boiling point of the solvent. The so obtained clear solution is then kept under reflux and stirring for further 30 minutes. The closed flask is then kept for 30 minutes in a thermostatic water bath at 25 °C for 30 minutes. The so formed solid is filtered on quick filtering paper. 100 cm³ of the filtered liquid is poured in a previously weighed aluminum container which is heated on a heating plate under nitrogen flow, to remove the solvent by evaporation. The container is then kept in an oven at 80 °C under vacuum until constant weight is obtained. The weight percentage of polymer soluble in xylene at room temperature is then calculated. The percent by weight of polymer insoluble in xylene at room temperature is considered the Isotacticity Index of the polymer.

### Intrinsic Viscosity (I.V.)

Determined in tetrahydronaphthalene at 135 °C.

### IZOD impact strength

Determined according to ISO 180/1A

### Hexane soluble fraction

10 g of material are placed in a 250ml glass flask with a ground-glass neck. 100 ml of hexane are added and let boil under reflux condenser for 4 hours, stirring constantly. After cooling in iced water the solution is filtered through a sintered-glass filter maintaining the solution at 0°C. 20 ml of the filtrate is evaporated in a tared glass dish. The residuate is dried in an oven at 100°C to 105°C for 1 hour then weighted.

### Sterilization procedure

The sample is placed in a steam sterilization autoclave Systec DX-65 set at 121 degree Celsius and 2.1 bar of nitrogen internal pressure. After 20 minutes of treatment in the autoclave, the item is let cool down to room temperature and conditioned at room temperature for 48 hours before testing.

### Preparation of solid catalyst component A

Into a 500 mL four-necked round flask, purged with nitrogen, 250 mL of TiCl₄ were introduced at 0 °C. While stirring, 10.0 g of microspheroidal MgCl₂*2.8C₂H₅OH (prepared according to the method described in ex.2 of USP 4,399,054) and 7.4 mmol of 9,9-bis(methoxymethyl)fluorene were added. The temperature was raised to 100 °C and maintained for 120 min. Then, the stirring was discontinued, the solid product was allowed to settle and the supernatant liquid was siphoned off. Then 250 mL of fresh TiCl₄ were added. The mixture was reacted at 120 °C for 60 min and, then, the supernatant liquid was siphoned off. The solid was washed six times with anhydrous hexane (6 x 100 mL) at 60 °C. Finally, the solid was dried under vacuum and analyzed. The resulting solid catalyst component contained: Ti = 3.5% by weight, 9,9-bis(methoxymethyl)fluorene = 18.1% by weight.

### Preparation of solid catalyst component B

Into a 500 mL four-necked round flask, purged with nitrogen, 250 mL of TiCl₄ were introduced at 0°C. While stirring, 10.0 g of microspheroidal MgCl_{2·}2.1C₂H₅OH having average particle size of 47µm (prepared according to the method described in ex.2 of USP 4,399,054) an amount of diethyl 2,3-diisopropylsuccinate such as to have a Mg/succinate molar ratio of 15 were added. The temperature was raised to 100°C and kept at this value for 60min. After that the stirring was stopped, the liquid was siphoned off. After siphoning, fresh TiCl₄ and an amount of 9,9-bis(methoxymethyl)fluorene such as to have a Mg/diether molar ratio of 30 were added. Then the temperature was raised to 110°C and kept for 30 minutes under stirring. After sedimentation and siphoning at 85°C, fresh TiCl4 was added. Then the temperature was raised to 90°C for 15min. After sedimentation and siphoning at 90°C the solid was washed six times with anhydrous hexane (6 x 100 ml) at 60 °C.

### Preparation of the catalyst system

Before introducing it into the polymerization reactors, the solid catalyst components A and B described above are contacted at 15 °C for 30 minutes with aluminum-triethyl (TEAL) and cyclohexyl-methyl-dimethoxysilane (CHMMS) used as external donor

### POLYMERIZATION examples 1 and 2

The polymerization runs were conducted in continuous in a series of two reactors equipped with devices to transfer the product from one reactor to the one immediately next to it. The first reactor is a polymerisation apparatus as described in EP 1 012 195.

The catalyst is sent to the polymerisation apparatus that comprises two interconnected cylindrical reactors, riser and downcomer. Fast fluidisation conditions are established in the riser by recycling gas from the gas-solid separator. The obtained product is then feed to a fluid bed gas phase reactor. Hydrogen was used as molecular weight regulator.

The gas phase (propylene, ethylene and hydrogen) is continuously analyzed via gas-chromatography.

At the end of the run the powder was discharged, dried in an oven at 60 °C under a nitrogen flow and pelletized. The polymerization parameters are reported in table 1.

**Table 1**

| **Example** | | | **1** | **2** |
|---|---|---|---|---|
| Solid catalyst component | | | A | B |
| Component A) | | | | |
| TEAL/external donor | | wt/wt | 6 | 6 |
| TEAL/catalyst | | wt/wt | 7.5 | 7.5 |
| Temperature | | °C | 72 | 73 |
| Pressure | | bar-g | 27 | 28 |
| Split holdup | riser | wt% | 38 | 34 |
| | downcomer | wt% | 62 | 66 |
| C₃ riser | | mole% | 76 | 76.8 |
| C₂ riser | | mole% | 2.5 | 2.9 |
| H₂/C₃ riser | | mol/mol | 0.002 | 0.009 |
| C₂/(C₂+C₃)Riser | | mol/mol | 0.032 | 0.037 |
| Component B (gas phase reactor) | | | | |
| Temperature | | °C | 80 | 75 |
| Pressure | | Bar-g | 15 | 13 |
| C₂/C₂+C₃ | | mol/mol | 0.085 | 0.0082 |
| H₂/C₂⁻ | | mol/mol | 0.15 | 0.283 |

| | | | | |
|---|---|---|---|---|
| C2⁻=ethylene; C3⁻=propylene; H2=hydrogen | | | | |

### Comparative example 2

Comparative example 2 is example 1 of WO 01/92406.

**Table 2 analysis of the polymer**

| Ex | | Ex 1 | EX2 | Comparative example 2 |
|---|---|---|---|---|
| **Component A** | | | | |
| MFR | g/10' | 1,2 | 2.2 | 1.7 |
| C2 | % | 4.8 | 4.5 | 2.5 |
| XS | % | 9.2 | 11.7 | 5.3 |
| **Component B** | | | | |
| Amount comp B | wt% | 11.4 | 13 | 19 |
| C2 content | wt% | 9.0 | 9.1 | nm |
| **Composition** | | | | |
| C2 content | wt% | 5.2 | 5.1 | 5.3 |
| Xylene Solubles | % | 14.4 | 13.0 | 13.4 |
| XSIV | dl/g | 1.42 | 1.26 | 3.6 |
| Characterization of composition | | | | |
| Melt Flow Rate | g/10' | 1.1 | 1.73 | 1.30 |
| Flexural Modulus | MPa | 711 | 716 | 715 |
| Flexural Modulus after ster. | MPa | 776 | 793 | nm |
| Izod Impact 23°C | kJ/m2 | 38,9 | 21,0 | nm |
| Izod Impact 0°C | kJ/m2 | 7,6 | 6,3 | nm |
| Izod Impact -20°C | kJ/m2 | 3,4 | 2,4 | nm |
| Hexane extr. on pellets | wt% | 2.4 | 3.2 | nm |
| Haze on 50 cast film | % | 2,0 | 2,0 | 8.2 |
| Haze on 50 µ m m cast film after ster. | % | 15,8 | 16,2 | nm |

| | | | | |
|---|---|---|---|---|
| C2= ethylene; C3 = propylene; nm=not measured | | | | |

From table 2 clearly results that the composition according to the present invention shows an improved haze on film by maintaining the same flexural modulus and the same total content of ethylene derived units (5.3 vs 5.2).

## Claims

1. Propylene polymer compositions comprising:
A) from 70 wt% to 95 wt%, of a random copolymer of propylene with ethylene, containing from 3.5 wt% to 6.5 wt% of ethylene derived units, having a content of fraction insoluble in xylene at 25°C of not less than 93wt%;
B) from 5 wt% to 35 wt%, of a copolymer of propylene with ethylene, containing from 8.5 wt% to 17.0 wt % of ethylene derived units;
the sum A+B being 100;
wherein the melt flow rate ,MFR (ISO 1133 (230° C, 2.16 kg) ranges from 0.6 g/10 min to 20.2 g/10 min.

2. The propylene polymer compositions according to claim 1, having a MFR of from 0.8 to 5.0 g/10 min..

3. The propylene polymer compositions according to claims 1-2 wherein the intrinsic viscosity [η] of the fraction (of the overall composition) soluble in xylene at 25°C ranges from 1 to 4.5 dl/g

4. The propylene polymer compositions according to anyone of claims 1-3 wherein the fraction (of the overall composition) soluble in xylene at 25°C ranges from 10.3 wt% to 18.5 wt%.

5. An injection molded article comprising the propylene polymer composition of claims 1-4.

6. Medical injection molded articles comprising the propylene polymer composition of claims 1-4.
